Europäisches Patentamt

European Patent Office

Office européen des brevets

(19)

(11) Numéro de publication : **0 473 468 A1**

(12) # DEMANDE DE BREVET EUROPEEN

(21) Numéro de dépôt : **91401845.2**

(22) Date de dépôt : **04.07.91**

(51) Int. Cl.$^5$ : **G06F 15/68,** G01S 3/786

(30) Priorité : **27.07.90 FR 9009614**

(43) Date de publication de la demande :
**04.03.92 Bulletin 92/10**

(84) Etats contractants désignés :
**DE ES GB IT NL**

(71) Demandeur : **THOMSON-TRT DEFENSE**
**88, rue Brillat-Savarin**
**F-75013 Paris (FR)**

(72) Inventeur : **Fety, Luc**
**THOMSON-CSF SCPI Cédex 67**
**F-92045 Paris la Défense (FR)**
Inventeur : **Terre, Michel**
**THOMSON-CSF SCPI Cédex 67**
**F-92045 Paris la Défense (FR)**
Inventeur : **Noreve, Xavier**
**THOMSON-CSF SCPI Cédex 67**
**F-92045 Paris la Défense (FR)**

(74) Mandataire : **Turlèque, Clotilde et al**
**THOMSON-CSF SCPI**
**F-92045 PARIS LA DEFENSE CEDEX 67 (FR)**

(54) **Procédé de traitement d'images pour la détection de l'horizon et dispositif de mise en oeuvre.**

(57)   Le procédé selon l'invention consiste, après une étape de traitement numérique du signal vidéo de l'image analysée par rangée, à déterminer pour chaque rangée, à partir de la répartition des énergies lumineuses moyennes en-deçà et au-delà de chaque position de la rangée, une fonction de modélisation en échelon dont la position du saut fournit la position de l'horizon dans cette rangée. Le dispositif de mise en oeuvre comporte un échantillonneur du signal vidéo (6) couplé à une mémoire flip flop (8) à travers un accumulateur (7) qui somme les valeurs de luminance rangée par rangée, et un processeur (9) qui calcule, à partir de la répartition des énergies lumineuses moyennes, le signal à soustraire au signal vidéo numérique grâce à un soustracteur (13).

   L'invention s'applique à la détection de l'horizon à partir d'une image analysée par colonne ou analysée par lignes.

FIG. 4

L'invention se rapporte au domaine du traitement d'images en vue de détecter automatiquement l'horizon qui apparaît sur ces images.

La détection automatique de l'horizon est déterminante pour certaines applications : systèmes de surveillance, aide au pilotage, aide à la détection de cibles, etc.

Parmi les procédés de détection connus on peut distinguer les procédés d'élaboration d'horizon artificiel et les procédés de détection d'horizon dans une image à partir d'un signal vidéo délivré par une caméra. Les premiers procédés sont basés sur un repérage de l'aéronef en position et en direction grâce à une centrale inertielle et les seconds sont basés sur des traitements d'images exploitant différents attributs ou paramètres caractéristiques de l'horizon (par exemple étude des gradients de luminance).

Les procédés connus manquent de précision tant au plan de la localisation spatiale qu'au plan de la détermination temporelle. Pour la première catégorie de procédés, la détermination de l'horizon est absolue, sans tenir compte du relief réel, car elle ne sert qu'à définir l'assiette de l'aéronef. Le manque de précision se traduit, pour la seconde catégorie de procédés, par un bruit important pouvant aller jusqu'à fournir une information aberrante.

L'invention vise à remédier à ces inconvénients en proposant un procédé utilisant des traitements d'images permettant la détection automatique de l'horizon avec une grande précision, en temps réel, et pour toutes les positions possibles de l'horizon. L'invention concerne également un dispositif de mise en oeuvre de ce procédé.

Pour atteindre ces objectifs, le procédé de traitement d'images selon l'invention, pour la détection de l'horizon à partir d'un signal vidéo délivré par une caméra thermique, est caractérisé en ce qu'il comporte les étapes suivantes :

- traitement numérique du signal vidéo pour obtenir les valeurs de luminance échantillonnées de l'image analysée rangée par rangée ;
- détermination, pour chaque position i d'une rangée k donnée, d'une fonction de modélisation en échelon dont le saut est situé en i et dont l'amplitude est calculée de façon à donner une erreur minimale de l'ensemble des valeurs prises par la fonction par rapport à l'ensemble des valeurs du signal de luminance de la rangée considérée ;
- sélection de la valeur $i_{hk}$ de i, correspondant à la position de l'horizon sur la rangée considérée, pour laquelle la fonction d'échelon déterminée à l'étape précédente a une amplitude calculée de façon à donner la plus faible de toutes les erreurs minimales ;
- reproduction des étapes précédentes pour toutes les rangées de l'image analysée et visualisation d'une courbe de lissage, représentant l'horizon, à partir de l'ensemble des valeurs $i_{hk}$ sélectionnées.

La présente invention sera mieux comprise et d'autres caractéristiques et avantages apparaîtront à la lecture de la description qui va suivre, en référence aux figures annexées qui représentent, respectivement :

- la figure 1, un schéma illustrant la structure d'une caméra thermique panoramique ;
- les figures 2a à 2c, des modélisations du signal de luminance d'une colonne donnée de l'image analysée sous forme de fonctions Heaviside ;
- les figures 3a et 3b, deux schémas synoptiques illustrant la formation de l'erreur commise en modélisant le signal de luminance d'une colonne donnée,
- la figure 4, le dispositif de détection d'horizon selon l'invention.

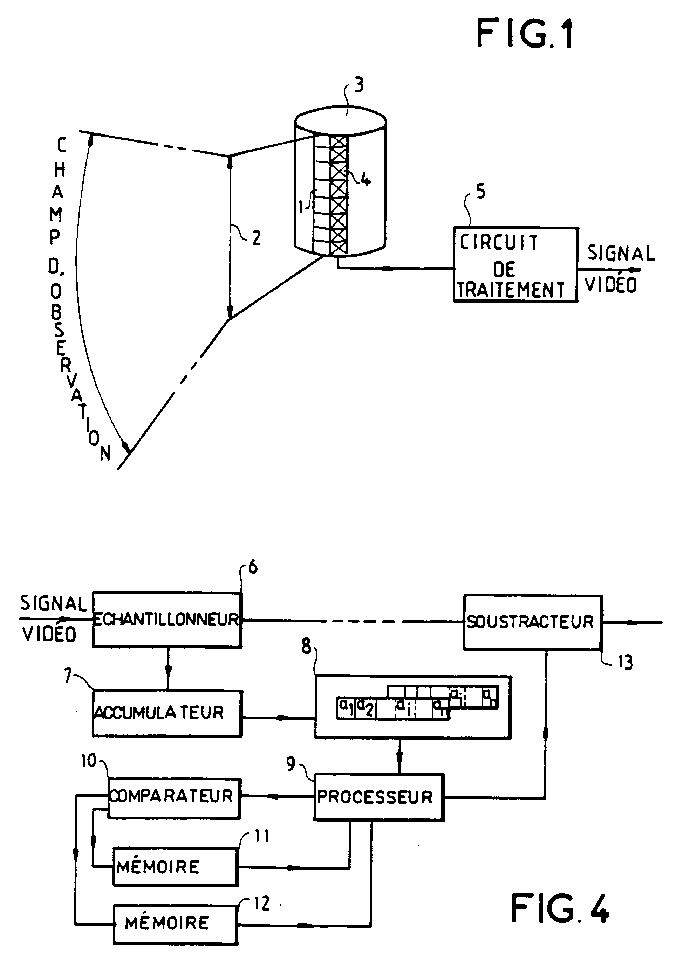

Le champ d'observation est analysé rangée par rangée par une caméra thermique, c'est-à-dire colonne par colonne ou ligne par ligne. Dans l'exemple de réalisation illustrant une première mise en oeuvre de l'invention, l'image est délivrée par une caméra thermique panoramique. Une telle caméra, en référence à la figure 1, est munie habituellement d'un capteur linéaire 1 constitué d'une barrette de n cellules photosensibles, disposée sur un support cylindrique 3, et sur laquelle est focalisé un secteur d'observation grâce à un système optique de focalisation 2. Les charges intégrées dans chaque cellule sont lues dans un registre 4 et délivrées sous forme d'un signal de luminance qui, après traitement électronique dans un circuit 5, fournit le signal vidéo. Les variations du signal vidéo traduisent donc les variations en température du champ d'observation analysé, colonne par colonne, sur p colonnes de n pixels. Dans ces conditions, la détection de l'horizon est opérée à partir des valeurs de luminance d'une image du champ d'observation analysée colonne par colonne.

L'horizon terrestre peut se définir comme la frontière entre le ciel et la terre. En imagerie thermique, le ciel et la terre ont des températures moyennes différentes, le ciel étant toujours beaucoup plus froid que la terre. L'horizon est donc un lieu continu où une séparation brutale se produit en température. Cette variation brutale est traduite, dans le cadre de la présente invention, par un saut.

L'invention repose, en effet, sur la modélisation de la courbe représentative des variations de luminance de chacune des rangées de valeurs par une fonction d'échelon ou fonction d'Heaviside. La démarche suivie par l'invention est donc une démarche globale qui tend, par un traitement d'optimisation tenant compte de l'ensemble des valeurs de luminance d'une rangée donnée, à sélectionner une fonction d'échelon dont le saut est situé à une position indicative de la position de l'horizon sur la colonne considérée. Le procédé selon l'invention peut être appliqué indifféremment à une caméra d'analyse d'image en colonnes ou en lignes. Dans le développement qui suit, ce procédé est d'abord appliqué à une analyse d'images en colonnes effectuée par la caméra panoramique, puis appliqué à une analyse d'image en lignes avec des variantes de mise en oeuvre.

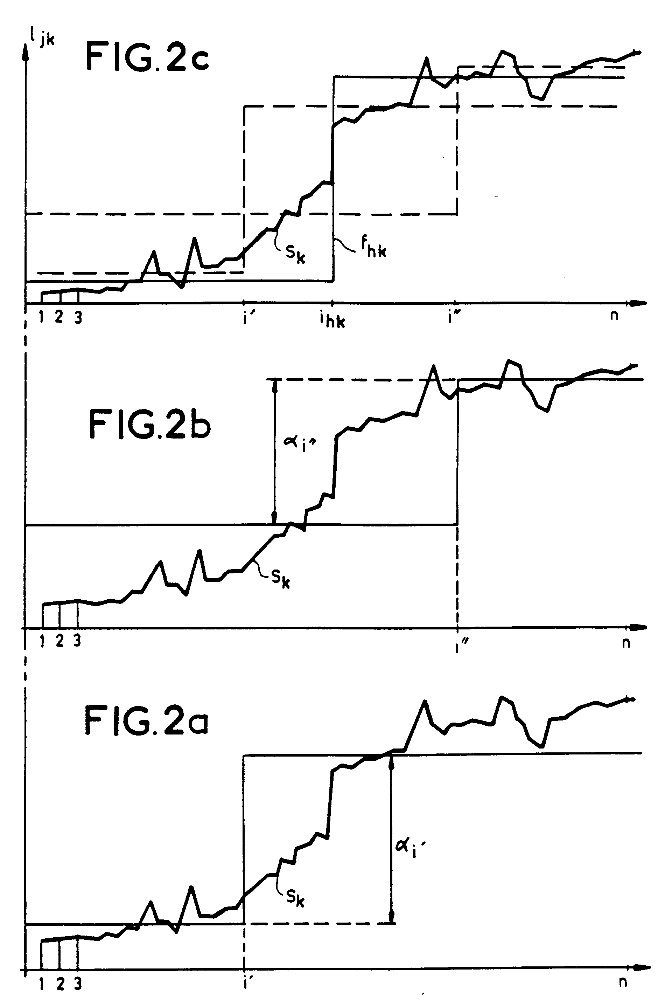

Plus précisément, en référence aux figures 2a à 2c, qui représentent par trois fois la courbe $S_k$ des valeurs de luminance $l_{jk}$ le long d'une colonne de rang k en fonction des positions 1 à n des points de la colonne, l'invention propose la modélisation de la courbe $S_k$ selon les étapes successives suivantes :

– échantillonnage du signal de variation de luminance en n valeurs réparties le long de la colonne de rang k ;

– modélisation de la courbe $S_k$ à chaque position i dans la colonne k, i variant de 1 à n, par une fonction d'échelon $\alpha_i f_i$ définie à partir :

– d'une fonction d'échelon normée $f_i$ dont le saut se situe à la position i, et,

– de l'amplitude de saut $\alpha_i$ qui permet de s'ajuster au mieux aux variations du signal de luminance de la colonne : l'amplitude $\alpha_i$ est déterminée en minimisant l'erreur entre les n valeurs de luminance $l_{jk}$ de la k$^{ième}$ colonne et les valeurs de la fonction respectivement aux mêmes positions (ainsi, la valeur de $\alpha_i$ résulte du calage des parties horizontales de la fonction d'échelon selon un processus décrit ci-après ).

– et sélection de la position $i_{hk}$ de i correspondant au niveau de l'horizon sur la k$^{ième}$ colonne considérée. Cette sélection de la position $i_{hk}$ est effectuée en choisissant la fonction d'échelon parmi l'ensemble des n fonctions d'échelon, associées à toutes les positions i et déterminées à l'étape précédente, qui présente l'erreur minimale par rapport aux variations du signal de luminance $S_k$ sur l'ensemble de la colonne k considérée. Les variations importantes de luminance isolées, qui ne correspondent pas à l'horizon, sont donc écartées, ce qui démontre l'intérêt de l'approche globale par rangée mise en oeuvre par l'invention.

Pour illustrer ces étapes, ont été représentées en trait plein sur les figures 2a et 2b les fonctions de modélisation $\alpha_{i'} f_{i'}$ et $\alpha_{i''} f_{i''}$ de la courbe $S_k$ pour des positions respectives i' et i'' ; sur la figure 2c ont été reportées en pointillé les fonctions précédentes ainsi que, en trait plein, la fonction de modélisation $f_{hk}$ déterminée à la position $i_{hk}$ qui correspond à la position de l'horizon sur la k$^{ième}$ colonne.

Pour accéder à la fonction d'échelon $\alpha_i f_i$ dont la courbe représentative s'ajuste au mieux à la courbe $S_k$ pour chaque position i, une voie possible est de minimiser au sens des moindres carrés l'erreur $e_i$ suivante fonction d'un coefficient ou amplitude variable :

$$e_i = [l_{jk} - \alpha f_i]$$

La recherche de ce minimum conduit à la valeur $\alpha_i$ de $\alpha$ qui vérifie que l'erreur $e_i$, élevée au carré, est minimale.

La fonction d'échelon normée $f_i$ utilisée doit être "centrée" sur une colonne, c'est-à-dire que la somme des valeurs prises par cette fonction sur cette colonne doit être nulle. Il est en effet impératif de conserver le niveau moyen de luminance de l'image, colonne par colonne, du fait de la puissance limitée du signal émis par la caméra. Un exemple de fonction d'échelon "centrée" est donné par les expressions suivantes :

$f_i (j) = -(n-i)$        pour j appartenant à [1,i]

$f_i (j) = i$        pour j appartenant à [i+1,n]

qui vérifient bien la condition imposée par le centrage

$$-(n-i)i + i(n-i) = 0$$

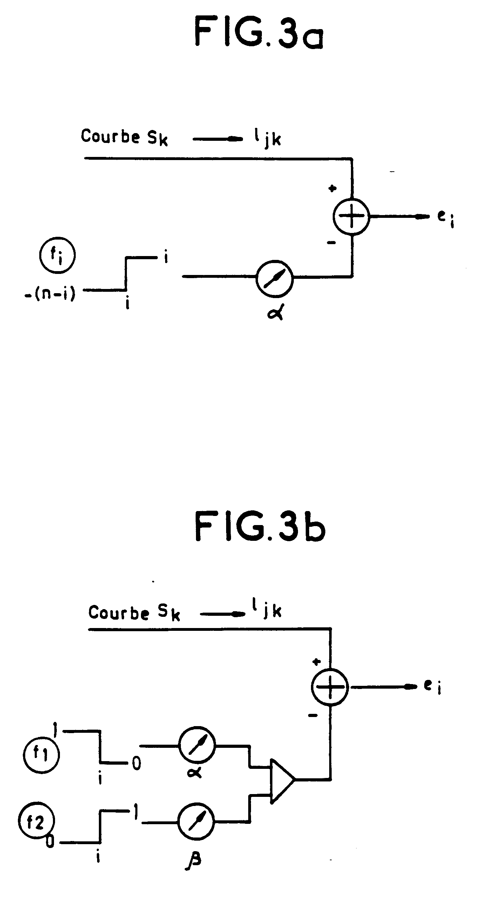

Symboliquement, la figure 3a matérialise la mise en forme de l'erreur $e_i$ par différence entre les valeurs de luminance $l_{jk}$ de la courbe $S_k$ et les valeurs respectives de la fonction d'échelon normée $f_i$ à laquelle est appliquée le coefficient variable $\alpha$.

En notation matricielle, soit L la matrice des valeurs de luminance correspondant à la courbe $S_k$ pour l'ensemble des niveaux de la k$^{ième}$ colonne, T le symbole de transposition de matrice, F la matrice des valeurs de la fonction d'échelon normée $f_i (j)$. L erreur $e_i^2$ a alors pour expression :

$$e_i^2 = (L - \alpha F)^T (L - \alpha F) \quad (I)$$

La valeur de i qui rend $e_i^2$ minimale vérifie que la dérivée de $e_i^2$ est nulle. La valeur de l'amplitude $\alpha_i$ de la fonction d'échelon qui lisse au mieux la courbe $S_k$ est déterminée en annulant cette dérivée. La valeur de $\alpha_i$ est alors donnée par l'expression :

$$\alpha_i = L^T F / F^T F \quad (II)$$

En remplaçant $\alpha$ par sa valeur $\alpha_i$ déterminée par la formule (II) dans l'expression de l'erreur $e_i^2$ (formule (I)), l'erreur minimale $e_{im}$ pour le niveau i correspondant est alors donné par :

$$e_{im}^2 = L^T L - (L^T F)^2 / F^T F \quad (III)$$

Pour chaque niveau i, la formule (II) fournit donc la valeur de l'amplitude de la fonction d'échelon lissant au mieux, au sens des moindres carrés, la courbe $S_k$, et la formule (III) fournit la valeur de l'erreur correspondant au lissage ainsi déterminé. D'après la structure de la formule (III), cette erreur mesure la différence d'énergies entre l'énergie lumineuse $L^T L$ de la colonne k et une énergie lumineuse "modélisée ", notée Q, obtenue par intervention de la fonction d'échelon normée.

La plus petite de toutes les erreurs $e_{im}$, appelée $e_m$, correspond à la fonction d'échelon $f_{hk}$ dont la courbe

représentative (figure 2c) s'ajuste au plus près à la courbe $S_k$ pour l'ensemble des i de la $k^{ième}$ colonne. La position $i_{hk}$ du saut de cette fonction $f_{hk}$ situe la position de l'horizon sur la colonne considérée. La valeur minimale $e_m$ de l'erreur $e_{im}$ correspond, d'après la formule (III), à la valeur maximale de la quantité Q :

Ainsi, en notant respectivement $a_i$ la somme des valeurs de luminance $l_{jk}$ des points j situés entre les positions 1 et i, et $b_i$ celle des valeurs $l_{jk}$ des points j situées entre les positions i+1 et n de la colonne considérée, la valeur $i_{hk}$ de i, qui indique la position de l'horizon sur la colonne considérée, rend maximale l'expression analytique $q_{ik}$ de l'énergie lumineuse Q, à savoir :

$$(-(n-i)a_i + ib_i)^2 / i(n-i) \quad (IV)$$

Pour accéder plus explicitement au type de répartition d'énergie lumineuse qui opère dans l'expression (IV), une variante du procédé selon l'invention consiste à modéliser la courbe représentative des valeurs de luminance de chaque colonne de l'image analysée par une combinaison de deux fonctions d'échelon unité $f_1$ et $f_2$, ce qui fournit une plus grande souplesse de modélisation.

Les deux fonctions d'échelon sont définies de manière à être décorellées l'une de l'autre. Un exemple de définition est fourni par les expressions suivantes :

$f_1 (j) = 1$ et $f_2 (j) = 0$     pour j appartenant à [1,i]

$f_1 (j) = 0$ et $f_2 (j) = 1$     pour j appartenant à [i+1, n]

La suite des étapes du procédé selon l'invention se déroule alors suivant le même type de schéma que dans le cas de l'approximation par une seule fonction d'échelon :

– détermination de deux coefficients multiplicateurs (or amplitudes) $\alpha_i$ et $\beta_i$ qui minimisent l'erreur :

$$e_i = l_{jk} - (\alpha_i f_1 + \beta_i f_2)$$

– et sélection de la valeur $i_{hk}$ de i correspondant à la plus petite des erreurs $e_i$.

La figure 3b symbolise par un schéma synoptique la formation de l'erreur $e_i$ obtenue par différence entre les valeurs de luminance $j_{jk}$ de la courbe $S_k$ et les valeurs respectives des deux fonctions d'échelon $f_i$ et $f_2$ auxquelles sont appliquées les coefficients $\alpha_i$ et $\beta_i$.

Dans ces conditions, par calcul direct ou par analogie avec l'étude à partir d'une seule fonction d'échelon, l'erreur minimale $e_{im}$, pour un i donné, s'exprime à l'aide des notations matricielles par l'expression :

$$e_{im}^2 = L^T L - [(L^T F_1)^2 / F_1^T F_1 + (L^T F_2)^2 / F_2^T F_2]$$

La recherche de la valeur $i_{hk}$ qui correspond à la position de l'horizon sur la colonne considérée, est identifiée, dans le cadre de l'invention, à la recherche de la valeur de i pour laquelle l'erreur $e_i$ est la plus petite de toutes sur cette même colonne. Or, cette plus petite erreur, appelée $e_m$, correspond d'après l'expression précédente au maximum de :

$$(L^T F_1)^2 / F_1^T F_1 + (L^T F_2)^2 / F_2^T F_2$$

Ainsi, en développant ces expressions matricielles à l'aide des notations $a_i$ et $b_i$ précédemment définies il vient, en notant $l_k$ l'énergie lumineuse de la colonne k :

$$e_{im} = l_k - q_{ik}$$

avec

$$l_k = (l_{jk})^2 \text{ et } q_{ik} = a_i^2/i + b_i^2/(n-i) \quad (V)$$

La valeur $i_h$ de i est donc celle qui correspond à la valeur maximale $q_{Mk}$ des quantités $q_{ik}$. Cette expression est à rapprocher de celle (expression (IV)) obtenue dans le cadre d'une modélisation à l'aide d'une seule fonction d'échelon : la différence entre les expressions (IV) et (V) est en effet une constante égale à l'énergie lumineuse moyenne de la colonne considérée :

$$s_k^2 / n,$$

avec $s_k = a_i + b_i$ = somme des valeurs de luminance de la colonne k.

Ainsi, chacune des valeurs $i_{hk}$ déterminée est la position pour laquelle la somme $q_{ik}$ des énergies lumineuses moyennes en-deçà et au-delà de cette position est maximale dans chacune des p colonnes ; comme chaque valeur $i_{hk}$ est la position de l'horizon sur la colonne correspondante, l'ensemble des p valeurs $i_{hk}$ donne la position de l'horizon modélisé point par point sur l'ensemble de l'image.

Afin de visualiser l'horizon ainsi modélisé par une courbe continue, il est connu de lisser un ensemble de points, par une courbe ou une droite ( en utilisant, par exemple, la transformée de Hough ou une régression linéaire). Cependant, le procédé précédemment décrit fournit systématiquement une position d' horizon pour chaque colonne, même lorsqu'aucun horizon n'est présent sur cette colonne (par exemple lorsque l'horizon fait un angle de plus de 45° avec l'horizontale). Un lissage à partir de l'ensemble des positions déterminées par le procédé selon l'invention serait perturbé par les positions erronées qui en résultent, en particulier pour une approximation par une droite.

Pour neutraliser l'effet perturbateur de ces positions aberrantes, il est utile d'introduire un coefficient de pondération définissant le degré de certitude des différentes positions déterminées par le procédé de l'invention. Cette pondération peut être avantageusement représentée par un rapport signal sur bruit (S/B), fonction de la valeur de l'erreur minimale $e_m$ commise en modélisant la courbe $S_k$ par la courbe représentative de la

fonction d'échelon $f_{hk}$ sélectionnée pour la colonne considérée. Cette approche est justifiée par le fait qu'une fonction d'échelon présentant une erreur relativement importante a peu de chance de correspondre à une transition réelle entre le ciel et la terre. Le rapport S/B peut, par exemple, être défini pour la $k^{ième}$ colonne comme l'écart relatif entre l'énergie lumineuse $I_k$ de cette colonne et le carré de l'erreur minimale $e_m$ sélectionnée pour cette colonne, soit :

$$S/B\ (k)\ =\ (\ I_k - e_m^2\ )\ /\ e_m^2$$

ou encore, d'après les expressions (V)

$$S/B\ (k)\ =\ q_{Mk}\ /\ (I_k - q_{Mk})$$

En définitive, il convient de rechercher la droite (D) dont la position et la pente minimisent l'expression suivante :

$$\Sigma_k\ S/B\ (k)\ x\ distance\ [niveau\ i_{hk},\ D]\quad (VI),$$

$i_{hk}$ étant la position sélectionnée comme représentant la position de l'horizon selon le procédé de l'invention pour la kième colonne, et S/B (k) le degré de certitude de ce niveau.

Le procédé selon l'invention peut également s'appliquer à une caméra effectuant une analyse en ligne de l'image du champ d'observation. Pour appliquer le procédé de l'invention à une telle caméra, plusieurs variantes sont possibles :

– l'application directe : la recherche de la position de l'horizon s'effectue directement en ligne, de la même manière qu'elle s'effectue en colonne ; le résultat obtenu est de qualité inférieure à celui obtenu à partir de la détermination en colonne pour les horizons proches de l'horizontale, du fait de l'imprécision qui apparaît alors dans cette zone ;

– mise en oeuvre d'une mémoire d'image afin de disposer de toutes les informations colonne par colonne ; cette solution est coûteuse et peut introduire un temps de retard peu souhaitable dans la détermination de l'horizon ;

– l'utilisation de l'énergie lumineuse de la trame précédente : l'expression (V), dont la valeur maximale détermine la position de l'horizon sur une colonne k donnée, peut encore s'écrire en faisant intervenir la somme $s_k$ des valeurs de luminence sur cette colonne :

$$q_i\ =\ a_i\ /\ _i\ +\ (s_k - a_i)^2\ /\ (n-i)\quad (V)\quad bis$$

L'image étant relativement stable d'une trame à l'autre, il suffit de prendre pour $s_k$ la valeur obtenue sur la trame précédente. Cette approximation est justifiée par le fait que la variation de l'énergie lumineuse d'une trame à la suivante peut être considérée comme négligeable.

Un mode de réalisation du procédé selon l'invention, adapté à une analyse d'images en mode colonne ou en mode ligne, est décrit ci-après, en référence à la figure 4.

En mode colonne, les variations de luminance des niveaux d'une même colonne k, après échantillonnage numérique dans l'échantillonneur 6, sont accumulées successivement dans un accumulateur 7, puis ces sommations partielles ($a_{1k}$, $a_{2k}$, ..., $a_{ik}$,..., $a_{nk} = s_k$) sont mémorisées dans une mémoire double flipflop 8. Un processeur 9 calcule alors, pour chaque niveau i de la colonne k considérée, la somme des énergies lumineuses moyennes au-delà et en deçà du niveau i, soit la quantité $q_i$ déjà rencontrée :

$$q_i\ =\ a_{ik}^2/i\ +\ (a_{nk}-a_{ik})^2\ /\ _{n-i}\quad (V)\quad ter$$

Les quantités ainsi calculées sont appliquées à un comparateur 10 qui permet, par comparaison successive de celles-ci deux à deux, de déterminer le rang $i_h$ correspondant au maximum de ces quantités et donc, d'après le procédé de l'invention, à la position de l'horizon sur la colonne considérée. Les valeurs $i_{hk}$, pour l'ensemble des colonnes de l'image analysée, sont mémorisées dans une mémoire 11. Il est avantageux, pour conserver la valeur de pondération S/B des niveaux ainsi sélectionnés, de mémoriser également les quantités maximales $q_{Mk}$ correspondantes dans une autre mémoire 12. Le processeur 9 calcule alors, à partir des valeurs fournies par les mémoires 11 et 12, les paramètres de la droite de régression linéaire qui lisse les niveaux déterminés par le procédé de l'invention à partir de la formule (VI). Le processeur 9 délivre alors un signal de forte luminance correspondant au niveau du point de la droite de régression dans la colonne considérée. Ce signal est appliqué, à travers un soustracteur 13, au niveau correspondant du signal de luminance numérisé de telle sorte que la valeur de luminance qui en résulte au niveau considéré soit inversée en valeur par rapport à la valeur initiale. Ainsi la droite de synthèse, matérialisant l'horizon déterminée par le procédé de l'invention, apparaît en contraste sur le paysage tel que visualisé sur un écran de contrôle à partir du signal vidéo fourni par le caméra.

En mode ligne, la double mémoire flip flop 8 est utilisée de la manière suivante : les valeurs de luminance cumulées, colonne par colonne jusqu'à une $i^{ème}$ ligne ($a_{i1}$, $a_{i2}$, ..., $a_{ik}$, ..., $a_{ip}$) sont stockées dans une des mémoires flip flop, et dans l'autre sont stockées les valeurs de luminance ($a_{n1}$, $a_{n2}$,..., $a_{nk}$,..., $a_{np}$) des colonnes de la trame précédente. Le processeur 9 calcule alors, de façon similaire au mode colonne, les quantités ayant pour expression la formule (V) adaptée selon (V) ter, et envoie les signaux de luminance maximale correspondant à la droite de regression, calculée à partir des valeurs mémorisées dans les mémoires 11 et 12 au soustracteur 13.

L'invention n'est pas limitée au mode de réalisation décrit et représenté. En particulier, le fonctionnement en temps réel du dispositif de mise en oeuvre selon l'invention est rendu possible par l'utilisation d'un processeur de signal de capacité adapté, par exemple un VLSI (circuit intégré à très grande échelle), ou par un traitement statistique des valeurs de luminance fournies par la caméra ; par exemple l'évaluation des fonctions d'échelon peut se faire à partir les valeurs de luminance prélevées tous les x pixels, par réduction de la zone de recherche de l'horizon, ou par recherche de l'horizon toutes les y colonnes. D'autre part, l'implantation de la carte de détection de l'horizon peut être aménagée en différents sites : directement au niveau de la délivrance du signal de luminance d'une caméra panoramique, ou au niveau du boîtier électronique contenant les différentes cartes de traitement. Le signal vidéo est alors préalablement échantillonné de manière à pouvoir être exploité à partir de valeurs numériques.

## Revendications

1. Procédé de traitement d'images pour la détection de l'horizon, à partir du signal vidéo délivré par une caméra formant l'image du champ d'observation analysée rangée par rangée, caractérisé en ce qu'il comporte les étapes suivantes :
   - traitement numérique du signal vidéo pour obtenir les valeurs de luminance échantillonnées de l'image analysée rangée par rangée ;
   - détermination, pour chaque position i d'une rangée k donnée, d'une fonction de modélisation en échelon dont le saut est situé en i et dont l'amplitude est calculée de façon à donner une erreur minimale par rapport à l'ensemble des valeurs du signal de luminance de la rangée considérée ;
   - sélection de la valeur $i_{hk}$ de i, correspondant à la position de l'horizon sur la rangée considérée, pour laquelle la position d'échelon déterminée à l'étape précédente a une amplitude calculée de façon à donner la plus faible de toutes les erreurs minimales ;
   - reproduction des étapes précédentes pour toutes les rangées de l'image analysée et visualisation d'une courbe de lissage, représentant l'horizon, à partir de l'ensemble des valeurs $i_{hk}$ sélectionnées.

2. Procédé de traitement d'images pour la détection de l'horizon selon la revendication 1 caractérisé en ce que la fonction d'échelon de modélisation est la somme de deux fonctions d'échelon décorrélées dont les amplitudes ont des valeurs telles que, pour chaque position i d'une rangée donnée, l'erreur entre les valeurs de la fonction de modélisation, et l'ensemble des valeurs échantillonnées prises respectivement au niveau correspondant par le signal de luminance, soit minimisée.

3. Procédé de traitement d'images selon les revendications 1 ou 2 caractérisé en ce que le niveau $i_{hk}$ de la position de l'horizon sur la rangée k est celui pour lequel la somme des énergies lumineuses moyennes en-deçà et au-delà de ce niveau est maximale dans la rangée considérée.

4. Procédé de traitement d'images selon les revendications 1 ou 2 appliqué à une analyse d'image par colonnes, caractérisé en ce que l'image est découpée en p colonnes, en ce que i varie en lignes de 1 à n et en ce que les valeurs $i_{hk}$ sélectionnées indiquent directement la hauteur de l'horizon sur l'image.

5. Procédé de traitement d'images selon les revendications 1 ou 2 appliqué à une analyse d'images par lignes, caractérisé en ce que l'image est découpée en n lignes, en ce que i varie en colonnes de 1 à p, et en ce que les valeurs $i_{hk}$ sélectionnées indiquent soit directement, soit indirectement après traitement des valeurs de luminance par colonne, la hauteur de l'horizon sur l'image.

6. Dispositif de traitement d'images pour la mise en oeuvre du procédé selon la revendication 4 caractérisé en ce qu'il comporte un échantillonneur de signal (b) dont les valeurs numérisées sont successivement adressées à un accumulateur (7) pour sommer ces valeurs numérisées au fur et à mesure de leur apparition, une mémoire flip flop (8) couplée à l'accumulateur (7) et qui mémorise les sommations cumulées, un processeur de signal (9) qui détermine, à partir des valeurs transmises par la mémoire (8) et pour chaque position i de chaque colonne k de valeurs de luminance, la quantité $q_i$ égale à la somme des énergies lumineuses moyennes au-delà et en deçà de la position i, un comparateur ( 10 ) couplé au processeur ( 9 ) pour sélectionner la quantité $q_{Mk}$ ayant la valeur maximale pour la colonne de rang k, des mémoires (11) et (12) couplées au comparateur ( 10) pour mémoriser respectivement les quantités $q_{Mk}$ et les valeurs

6

$i_{hk}$ de i correspondantes, et un soustracteur (13) monté sur le circuit délivrant le signal vidéo échantillonné et sur le processeur (9) pour soustraire su signal provenant de l'échantillonneur (6) un signal de luminance maximale provenant du processeur (9) pour le niveau de chaque colonne où est positionné le point de la droite représentant la position de l'horizon sur la colonne considérée, cette droite étant calculée dans le processeur (9) par régression linéaire par application des valeurs de niveaux mémorisés dans la mémoire (12) et des valeurs de pondération correspondantes mémorisées dans la mémoire (11).

7. Dispositif selon la revendication 6 pour la mise en oeuvre du procédé selon la revendication 5 caractérisé en ce que l'une des mémoires flip flop (8) mémorise successivement les sommations partielles des valeurs de luminance pour cumuler et stocker les valeurs de luminance colonne par colonne et que l'autre mémoire stocke les valeurs de luminance des colonnes de la trame d'image précédente, en ce que les quantités $q_i$ sont calculées dans le processeur (9), à partir des sommations partielles de luminance provenant de la première des mémoires flip flop 18) et des sommations des valeurs de luminance des colonnes provenant de la seconde des mémoires flip flop (8).

# FIG.1

CHAMP D'OBSERVATION

CIRCUIT DE TRAITEMENT

SIGNAL VIDÉO

SIGNAL VIDÉO

ECHANTILLONNEUR

SOUSTRACTEUR

ACCUMULATEUR

COMPARATEUR

PROCESSEUR

MÉMOIRE

MÉMOIRE

# FIG.4

FIG.2c

FIG.2b

FIG.2a

# FIG.3a

# FIG.3b

EP 0 473 468 A1

**Office européen des brevets**

# RAPPORT DE RECHERCHE EUROPEENNE

Numero de la demande

EP 91 40 1845

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int. Cl.5) |
|---|---|---|---|
| A | SIGNAL PROCESSING<br>vol. 13, no. 2, Septembre 1987, AMSTERDAM, NL<br>pages 197 - 207;<br>N.B. CHAKRABORTI ET AL.: 'Transition detection in image processing'<br>* le document en entier * | 1 | G06F15/68<br>G01S3/786 |
| A | L'ONDE ELECTRIQUE<br>vol. 68, no. 2, Mars 1988, PARIS, FR<br>pages 53 - 57;<br>G. HERBY: 'Traitement d'images infrarouge'<br>* page 54, alinéa II.3 * | 1 | |
| A | COMPUTER VISION, GRAPHICS, AND IMAGE PROCESSING<br>vol. 34, no. 3, Juin 1986, DULUTH, US<br>pages 321 - 343;<br>M. SHAH ET AL.: 'Pulse and staircase edge models'<br>* page 326 * | 1 | |

**DOMAINES TECHNIQUES RECHERCHES (Int. Cl.5)**

G06F
G01S

Le présent rapport a été établi pour toutes les revendications

| Lieu de la recherche | Date d'achèvement de la recherche | Examinateur |
|---|---|---|
| LA HAYE | 06 NOVEMBRE 1991 | CHATEAU J.P. |

**CATEGORIE DES DOCUMENTS CITES**

X : particulièrement pertinent à lui seul
Y : particulièrement pertinent en combinaison avec un autre document de la même catégorie
A : arrière-plan technologique
O : divulgation non-écrite
P : document intercalaire

T : théorie ou principe à la base de l'invention
E : document de brevet antérieur, mais publié à la date de dépôt ou après cette date
D : cité dans la demande
L : cité pour d'autres raisons
& : membre de la même famille, document correspondant

EPO FORM 1503 03.82 (P0402)

11

ANNEXE AU RAPPORT DE RECHERCHE EUROPEENNE
RELATIF A LA DEMANDE DE BREVET EUROPEEN NO.

EP 91 40 1845

La présente annexe indique les membres de la famille de brevets relatifs aux documents brevets cités dans le rapport de recherche européenne visé ci-dessus.
Lesdits members sont contenus au fichier informatique de l'Office européen des brevets à la date du
Les renseignements fournis sont donnés à titre indicatif et n'engagent pas la responsabilité de l'Office européen des brevets.      06/11/91

| Document brevet cité au rapport de recherche | Date de publication | Membre(s) de la famille de brevet(s) | Date de publication |
|---|---|---|---|
| /*– – | | FR-A-   1515687<br>GB-A-   115410<br>NL-C-   133871<br>NL-A-   660376 | |

Pour tout renseignement concernant cette annexe : voir Journal Officiel de l'Office européen des brevets, No.12/82

EPO FORM P0460